# EUROPÄISCHE PATENTSCHRIFT

(11) **EP 3 214 325 B1**
(45) Veröffentlichungstag und Bekanntmachung des Hinweises auf die Patenterteilung: **21.11.2018**
(21) Anmeldenummer: 17158819.7
(22) Anmeldetag: 02.03.2017
(51) Int. Cl.: F16C 19/50

(54) **SCHWENKLAGER**
OSCILATORY BEARING
PALIER OSCILLANT

(30) Priorität: 03.03.2016 DE 102016103856
(43) Veröffentlichungstag der Anmeldung: 06.09.2017
(73) Patentinhaber: BPW Bergische Achsen KG, 51674 Wiehl (DE)
(72) Erfinder: Klaas, Thomas, 51580 Reichshof (DE)
(74) Vertreter: Bungartz Christophersen Partnerschaft mbB Patentanwälte

(56) Entgegenhaltungen:
- EP-A1- 2 312 173
- DE-A1-102004 031 792
- GB-A- 2 076 464

## Beschreibung

Die Erfindung betrifft ein Schwenklager nach dem Oberbegriff des Patentanspruchs 1.

Schwenklager mit diesen Merkmalen sind als Halbschalenlager aus der EP 2 312 173 A1 und der DE 10 2013 211 447 A1 bekannt. Ein solches Schwenklager besteht aus einer äußeren, gekrümmten Lagerschale, an der innen eine Wälzbahn ausgebildet ist. In der Wälzbahn rollen Wälzkörper ab, die in einem Lagerkäfig zusammengefasst sind. Der Lagerkäfig und die Lagerschale sind in radialer Richtung gegeneinander verriegelt, so dass sie radial nicht auseinanderfallen können.

Beim Transport solcher Schwenklager, aber auch bei dessen Handhabung während der Montage am bestimmungsgemäßen Einsatzort, z. B. in der Zuspannung einer Fahrzeug-Scheibenbremse, besteht die Gefahr eines ungewollten Auseinanderfallens der inneren und der äußeren Lagerbestandteile. Erfolgt aber der Einbau des Wälzlagers nicht in korrekter Lage und Ausrichtung der Lagerbestandteile, kann es später zu einer Fehlfunktion oder einem Ausfall der Bremse mit entsprechend weitreichenden Folgen kommen. Es ist daher, sofern keine besonderen Maßnahmen für den Fall getroffen werden, dass sich die Bauteile ungewollt voneinander lösen, eine große Sorgfalt beim Transport des Schwenklagers erforderlich, ebenso bei dessen Handhabung bei der Vorbereitung und der Durchführung der Montage am Einsatzort. In der DE 10 2013 211 447 A1 wird daher für das Schwenklager eine Transportverriegelung vorgeschlagen.

Der Erfindung liegt daher ebenfalls die **Aufgabe** zugrunde, die Gefahr eines ungewollten Auseinanderfallens der inneren und der äußeren Lagerbestandteile zu verringern, und damit das Schwenklager bei der Montage einfacher handhaben zu können.

Zur **Lösung** dieser Aufgabe wird ein Schwenklager mit den Merkmalen des Patentanspruchs 1 vorgeschlagen.

Indem sich der an der Lagerschale ausgebildete Vorsprung in eine Öffnung des Lagerkäfigs hinein erstreckt, die zwar zu der Wälzbahn hin offen ist, aber in beide Umfangsrichtungen geschlossen ist, besteht vor der Montage des Schwenklagers z. B. in einer Scheibenbremse, keine Gefahr eines ungewollten Auseinanderfallens der inneren und der äußeren Lagerbestandteile aufgrund von Relativbewegungen in Umfangsrichtung. Das Schwenklager lässt sich daher vor seiner Montage und auch im Rahmen seiner Montage an dem bestimmungsgemäßen Einsatzort einfacher handhaben.

Die Erfindung wird im Folgenden anhand der Zeichnungen beschrieben. Darin zeigen
- Fig. 1: einen Schnitt durch den Bereich der Zuspannung einer druckluftbetriebenen Scheibenbremse, mit einem schwenkbaren Zuspannhebel, zwei Schwenklagern, von denen hier nur eines dargestellt ist, und einem Druckstück;
- Fig. 2: das Schwenklager in perspektivischer Darstellung;
- Fig. 3: eine andere perspektivische Darstellung des Schwenklagers;
- Fig. 4: eine Ansicht des Schwenklagers;
- Fig. 5: einen Schnitt gemäß der Schnittebene V-V der Fig. 4;
- Fig. 6: einen Schnitt gemäß der Schnittebene VI-VI der Fig. 4;

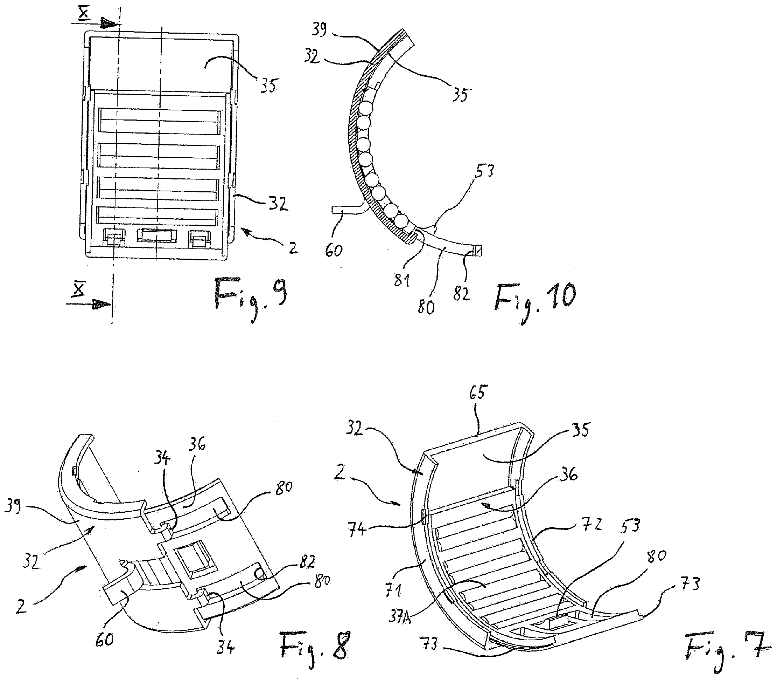

- Fig. 7: das Schwenklager in einer gegenüber Figur 2 anderen Schwenklage;
- Fig. 8: eine andere perspektivische Darstellung hierzu;
- Fig. 9: eine Ansicht hierzu;
- Fig. 10: einen Schnitt gemäß der Schnittebene X - X der Fig. 9.

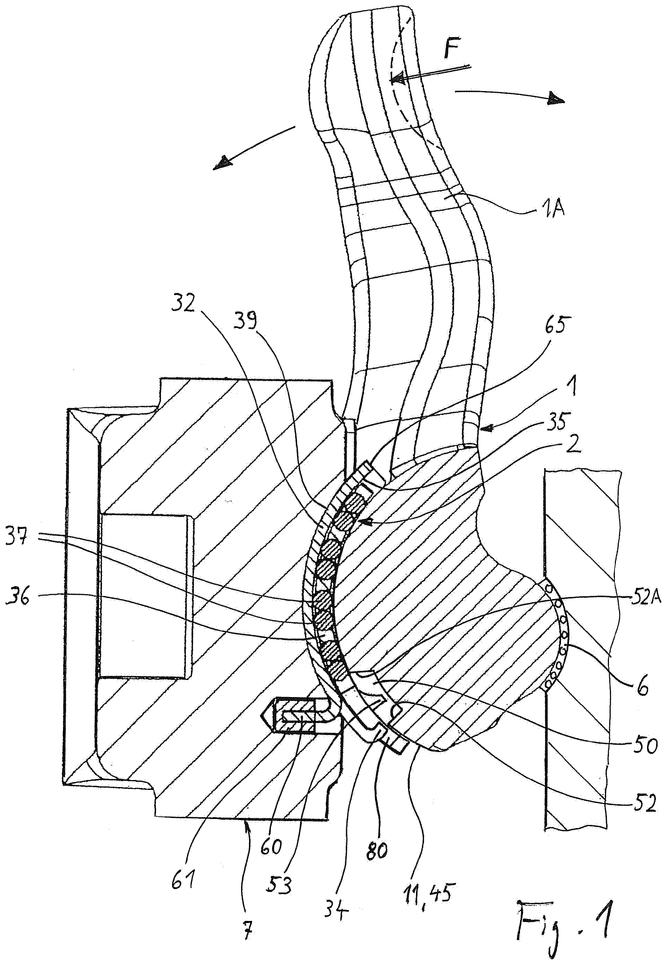

Die Figur 1 zeigt, als Bestandteil einer druckluftbetriebenen Nutzfahrzeug-Scheibenbremse, eine der Bremskraftübertragung und -verstärkung dienende Anordnung aus einem schwenkbaren Zuspannhebel 1, zwei Wälzlagern, von denen in Fig. 1 nur ein Wälzlager 2 dargestellt ist, und einem Druckstück 7. In einem Bremssattel der Scheibenbremse ist ein Druckstempel geführt. Bei Betätigung der Bremse legt sich der Druckstempel nach Überwindung eines Lüftspiels gegen die Rückseite eines inneren Bremsbelags und drückt diesen gegen die rotierende Bremsscheibe der Scheibenbremse. Zugleich wird rückwärtig über den Bremssattel die Reaktionskraft auf den anderen, von außen gegen die Bremsscheibe arbeitenden Bremsbelag übertragen. Zum Ausgleich des sich im Laufe der Zeit einstellenden Bremsverschleißes kann die Scheibenbremse mit einer Nachstelleinrichtung versehen sein.

Die Reibkraft zwischen der Bremsscheibe und den Bremsbelägen und damit die Verzögerung des Fahrzeugs ist abhängig von der Zuspannkraft, die von einem an dem Bremssattel befestigten Bremszylinder, vorzugsweise einem druckluftbetätigtem Bremszylinder, erzeugt wird. Der hier nur anhand seiner Betätigungskraft F symbolisierte Bremszylinder arbeitet gegen das freie Ende eines Schwenkarms 1A, mit dem der Zuspannhebel versehen ist.

Im Übrigen ist der Hebel 1 gabelförmig gestaltet, indem zwar nur ein Schwenkarm 1A vorhanden ist, aber die Zuspannwelle des Hebels aus zwei axial zueinander beabstandeten Abschnitten besteht. Zwischen diesen zwei Abschnitten kann sich, auf derselben Mittellinie wie der Schwenkarm 1A angeordnet, ein Freiraum befinden.

Mit der Rückseite der so aus zwei Abschnitten bestehenden Zuspannwelle ist der Hebel 1 mittels eines weiteren Schwenklagers 6 gegen den Bremssattel abgestützt. Bei Betätigung des Bremszylinders schwenkt der Hebel 1 um das weitere Schwenklager 6 in Richtung zu der Bremsscheibe. Diese Schwenkbewegung führt, indem die Drehachse der Lagerung des Hebels 1 am Druckstück 7 exzentrisch zu der Drehachse des Schwenklagers 6 angeordnet ist, zu einem Vortreiben des Druckstücks 7 in Richtung zur Bremsscheibe.

Da die Lagerung des Zuspannhebels 1 am Druckstück 7 auf zwei Abschnitte der Zuspannwelle aufgeteilt ist, ist jeweils ein als Wälzlager ausgebildetes Schwenklager 2 für die Schwenklagerung des Hebels 1 gegenüber dem Druckstück 7 angeordnet. Zu diesem Zweck ist der Hebel 1 auf jedem der beiden Abschnitte, dem Druckstück 7 zugewandt, mit jeweils einer konvex gekrümmten Druckfläche 11 versehen. Jede Druckfläche 11 ist teilzylindrisch bzw. teilkreisförmig mit Bezug auf die Drehachse.

Entsprechend weist das gegenüberliegende Druckstück 7 zwei konkav gekrümmte Druckflächen in Schalenform auf. Auch diese sind teilzylindrisch bzw. teilkreisförmig mit Bezug auf die Drehachse.

Zwischen den so paarweise vorhandenen Druckflächen am Hebel 1 und am Druckstück 7 befindet sich jeweils das schalenförmige Schwenklager 2. Dessen Drehachse ist gegenüber der Drehachse des Schwenklagers 6 versetzt, über das der Hebel 1 zur Aufnahme der Reaktionskräfte rückseitig gegen den Bremssattel abgestützt ist. Durch die Exzentrizität zwischen den beiden Schwenk- bzw. Drehachsen kommt es beim Verschwenken des Hebels 1 zu einer Vorverlagerung der Druckflächen 11 des Hebels 1 in Richtung zum Druckstück 7, und damit zu dem gewünschten Vorschub und der Zuspannung des Druckstücks 7 in Richtung zur Bremsscheibe.

Zu jedem der beiden Schwenklager 2, die identisch gestaltet sind, gehören jeweils eine druckstückseitige Wälzbahn 35, eine hebelseitige Wälzbahn 45, und dazwischen ein teilkreisförmig gekrümmter Lagerraum, in dem ein einzelner Lagerkäfig 36 mit darin drehgelagerten Wälzkörpern 37 Platz findet. Die Wälzkörper 37 sind längliche Zylinderrollen, die zugleich an beiden Wälzbahnen 35, 45 abrollen, und sich über den größten Teil der Breite des Lagerkäfigs 36 erstrecken. Der Lagerkäfig 36 besteht vorzugsweise aus Kunststoff.

Die druckstückseitige Wälzbahn 35 befindet sich an der konkav gestalteten Innenseite einer gebogenen Lagerschale 32. Mit ihrer konvex gestalteten Außenseite 39 ist die Lagerschale 32 gegen die ebenso schalenförmig gebogene Druckfläche an dem Druckstück 7 abgestützt. Die Lagerschale 32 besteht vorzugsweise aus gestanztem und dann verformtem Metallblech.

An dem dem Schwenkarm 1A abgewandten Ende der Lagerschale 32 ist an dieser, links und rechts der Lagermittellinie, jeweils eine Lasche 34 angeformt. Jede der zwei Laschen 34 dient als ein Vorsprung. Dieser Vorsprung bildet einen in beide Umfangsrichtungen wirkenden Anschlag, der die Beweglichkeit des Lagerkäfigs 36 relativ zu der Lagerschale 32 in beide Umfangsrichtungen begrenzt. Der Lagerkäfig 36 mit den Wälzkörpern 37 kann sich nur soweit in Umfangsrichtung bewegen, bis er gegen diesen doppelt wirkenden Anschlag 34 stößt. Somit besteht, solange das Schwenklager noch nicht an seinem Einsatzort montiert ist, keine Gefahr, dass sich der Lagerkäfig 36 soweit in Umfangsrichtung bewegt, dass er und die äußere Lagerschale 32 auseinanderfallen.

Der Hebel 1 ist, um dort das Abwälzen der Wälzkörper 37 zu ermöglichen, mit einer hebelseitigen Wälzbahn 45 versehen. Diese wird durch die direkt am Hebel 1 durch eine Schleifbearbeitung ausgebildete Druckfläche 11 gebildet. In dieser Wälzbahn 45 befindet sich eine Öffnung in der Gestalt einer Tasche 50. Bei der Tasche 50 handelt es sich um eine Materialausnehmung in der konvex gekrümmten Druckfläche 11, welche zugleich die hebelseitige Wälzbahn 45 für die Wälzkörper bildet.

Die Öffnung in Gestalt der Tasche 50 erstreckt sich nur über einen kleinen Teil der Gesamtlänge der gekrümmt verlaufenden Wälzbahn 45. Sie erstreckt sich auch nur über einen Teil der Breite der Wälzbahn 45, so dass zu beiden Seiten der Tasche 50 Wälzbahnbereiche zum Abrollen der Wälzkörper 37 verbleiben.

Die Tasche 50 bildet dort, wo ihre Wandung an die teilzylindrisch verlaufende Krümmungsebene der Wälzbahn 45 stößt, eine Anschlagkante 52 (Fig.1). Diese Anschlagkante 52 bildet einen im Lagerbetrieb wichtigen Anschlag, denn dann begrenzt sie die Beweglichkeit des Lagerkäfigs 36 in von dem Schwenkarm 1A abgewandter Umfangsrichtung.

An dem einen Ende des Lagerkäfigs 36 ist, der Anschlagkante 52 in Umfangsrichtung gegenüberliegend, ein Vorsprung 53 ausgebildet. Der Vorsprung 53 erstreckt sich nach radial innen bis über die gekrümmte Ebene hinaus, in der sich die Wälzbahn 45 befindet, und erstreckt sich daher in die Tasche 50 hinein.

Da der Lagerkäfig 36 aus Kunststoff besteht, ist der Vorsprung 53 einstückig an dem Lagerkäfig angeformt.

Ein Gegenanschlag 52A, welcher in die andere Umfangsrichtung wirkt und der Anschlagkante 52 gegenüberliegt, befindet sich ebenfalls an der Tasche 50. Die in Umfangsrichtung betrachtete Länge des Vorsprungs 53 ist daher deutlich geringer, als die in Umfangsrichtung betrachtete Länge der Tasche 50.

In der Normalposition des Hebels, d. h. bei fehlender Zuspannung, erfolgt die Grundpositionierung des Lagerkäfigs 36. Dieser ist zwischen den beiden Anschlägen so positioniert, dass dem Lagerkäfig 36 keine nennenswerte Bewegung möglich ist. Je weiter der Hebel 1 bei seiner Betätigung verschwenkt, desto mehr wandert der Käfig durch das Abrollen der Wälzkörper 37. Daher ist in Umfangsrichtung die Länge des Vorsprungs 53 geringer als die durch die Anschläge 52, 52A bestimmte Länge der Tasche 50, in die der Vorsprung 53 eintaucht und in der er sich bewegen kann.

Die Tasche 50 befindet sich auf jenem Umfangsabschnitt der hebelseitigen Wälzbahn 45, der am weitesten von dem Schwenkarm 1A entfernt liegt. Denn in der Situation maximaler Zuspannkraft sind die in dem Lagerkäfig 36 zusammengefassten Wälzkörper 37 soweit auf der hebelseitigen Wälzbahn 45 gewandert, dass sich kein Wälzkörper 37 mehr auf jenem Längsabschnitt der Wälzbahn 45 befindet, auf dem die Tasche 50 angeordnet ist. Bei maximalen Kräften steht daher für alle Wälzkörper 37 die volle Breite der Wälzbahn 45 zur Abstützung zur Verfügung. Zu Beginn der Zuspannung hingegen rollen einige Wälzkörper 37 noch auf jenem Längsabschnitt der Wälzbahn 45 ab, auf dem sich die Tasche 50 befindet. Da sich die Tasche in der Mitte der Wälzbahnbreite befindet, stützen sich diese Wälzkörper 37 dann nur zu beiden Seiten der Tasche 50 ab, und nicht in der Mitte. Wegen der in dieser Situation nur geringen Wälzlagerkräfte ist dies nicht von Nachteil.

Da die Bestimmung der Tasche 50 die Bereitstellung der Anschlagkanten 52, 52A für den Lagerkäfig ist, reicht eine geringe Breite der Tasche 50 aus. Je geringer diese Breite ist, desto mehr Breite steht als Aufstands- und Abrollfläche für die Wälzkörper 37 zur Verfügung, die sich allesamt über die volle Breite der Wälzbahn 45 erstrecken. Vorzugsweise beträgt die Breite der Tasche 50 nur etwa ein Drittel der Aufstandsbreite der Wälzkörper 37 auf der Wälzbahn 45.

Bei der hier beschriebenen Ausführungsform ist die Tasche 50 innerhalb der Wälzbahn 45 angeordnet, d. h. Tasche 50 ist allseitig von der Wälzbahn 45 umgeben. Je nach Hebelgeometrie lässt sich jedoch auch bereits mit einer Tasche 50, die in Umfangsrichtung nur teilweise in die Wälzbahn 45 hinein reicht, jener Anschlag 52 realisieren, welcher die Beweglichkeit des Lagerkäfigs 36 in die zweite Umfangsrichtung begrenzt. Auch in diesem Fall befindet sich die Anschlagkante 52 dort, wo die Wandung der Tasche 50 auf jene Krümmungsebene stößt, in der sich die Wälzbahn 45 befindet.

Für die Befestigung der jeweiligen Lagerschale 32 an dem Druckstück 7 ist jede Lagerschale 32 über einen nach außen ragenden Verankerungszapfen 60 in dem Druckstück 7 verdübelt. Der Verankerungszapfen 60 ist von rechteckigem Querschnitt mit zwei längeren und zwei kürzeren Seiten. Er sitzt in einer im Wesentlichen ebenfalls rechteckigen Öffnung eines Dübels 61, der seinerseits in einer Bohrung in dem Druckstück 7 sitzt.

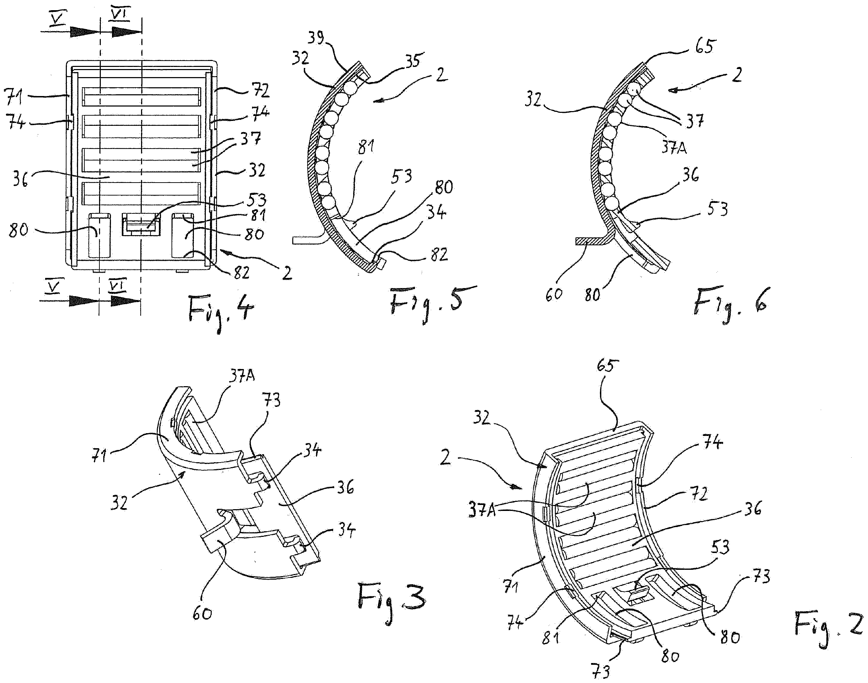

Die Figuren 2 und 3 zeigen, passend für jede Seite des Hebels 1, ein fertigmontiertes Schalenlager 2 vor der abschließenden Befestigung an der muldenförmigen Fläche des Druckstücks 7. Beide Schalenlager 2 sind identisch gestaltet, bei der Montage kann es daher nicht zu einem versehentlichen Vertauschen kommen.

Die gegen das Druckstück 7 abgestützte Lagerschale 32 ist an beiden Längsrändern mit radial nach innen gerichteten Seitenwänden 71, 72 versehen. Zwischen den Seitenwänden 71, 72 befindet sich der Lagerkäfig 36, der daher durch die Seitenwände 71, 72 seitlich geführt ist. An beiden Seitenwänden 71, 72 sind Vorsprünge 74 von solcher Breite ausgebildet, dass sich die Vorsprünge 74 bis über Längsränder 73 des Lagerkäfigs 36 erstrecken, wodurch die Vorsprünge 74 den Lagerkäfig 36 in radialer Richtung in der Lagerschale 32 verriegeln. Der Lagerkäfig 36 kann sich daher nicht radial aus der Lagerschale 32 lösen. Bei den Vorsprüngen 74 handelt es sich um örtliche Materialverformungen der Ränder der Seitenwände 71, 72.

Der Lagerkäfig 36 ist an seinen beiden Längsrändern 73 flacher als in seinem die Wälzkörper 37 zusammenfassenden Mittelbereich. Diese Ausgestaltung ermöglicht an der Lagerschale 32 kurze Seitenwände 71, 72, also Seitenwände 71, 72 von geringer radialer Erstreckung.

Die Seitenwände 71, 72 sind insbesondere so kurz, dass sie sich radial weniger weit erstrecken, als die zylindrischen Mantelflächen 37A der Wälzkörper 37. Die Seitenwände 71, 72 ragen daher bei fertig montierter Lagerung nicht bis an die hebelseitige Wälzbahn 45 heran. Die maximale Breite der Wälzbahn 45 unterliegt daher keinen Beschränkungen, wodurch sich die Kosten für die Herstellung des Hebels 1 reduzieren lassen.

Der Lagerkäfig 36 ist an demselben Ende, an dem sich der Vorsprung 53 befindet, mit zwei gleich gestalteten Öffnungen 80 versehen. Die Öffnungen 80, zwischen denen sich mittig der Vorsprung 53 befindet, sind in beide Umfangsrichtungen geschlossen, und hierzu vorzugsweise als Langlöcher gestaltet. Alternativ können an denselben Stellen des Lagerkäfigs langlochförmige Ausnehmungen oder Vertiefungen vorhanden sein, die zu der Wälzbahn 35 hin offen sind.

In jedes Langloch 80 bzw. in die langlochförmige Ausnehmung hinein erstreckt sich jener abgewinkelte Vorsprung 34, welcher in Form einer Lasche 34 an dem Ende der Lagerschale 32 einstückig angeformt ist. Der Vorsprung 34 ist von solcher radialer Länge, dass er sich über die Wälzbahn 35 hinaus bis in die langlochförmige Öffnung 80 bzw. Ausnehmung hinein erstreckt. Da die Öffnungen 80 in beide Umfangsrichtungen geschlossen sind, bilden die zwei Enden der Öffnungen 80 jeweils einen Anschlag 81, 82 für die jeweilige Lasche 34, die selbst einen Doppelanschlag bildet.

Der Lagerkäfig 36 setzt sich in Umfangsrichtung aus einem Hauptabschnitt, auf dem die Wälzkörper 37 angeordnet sind, und zu den Enden hin aus Endabschnitten zusammen. Die Langlöcher 80 und der Vorsprung 53 sind an dem dem Schwenkarm 1A abgewandten Endabschnitt ausgebildet, wodurch die Lauffläche für die Wälzkörper 37 nicht beeinträchtigt wird.

Ähnlich wie der Vorsprung 53 sind auch die beidseits des Vorsprungs 53 angeordneten Langlöcher 80 von relativ geringer Breite. Ihre Breite beträgt maximal ein Drittel der Breite des Lagerkäfigs 36.

Von Vorteil für die Kompaktheit des Schwenklagers ist, dass die Lagerschale 32 an dem anderen ihrer in Umfangsrichtung gerichteten Enden mit einer zur Umfangsrichtung quer angeordneten, geraden Abschlusskante 65 versehen ist, bis an die die Wälzbahn 35 für die Wälzkörper unmittelbar heranreicht.

### Bezugszeichenliste

- 1: Zuspannhebel, Hebel
- 1A: Schwenkarm
- 2: Wälzlager, Schwenklager
- 6: Schwenklager
- 7: Druckstück
- 11: Druckfläche
- 32: Lagerschale
- 34: Abwinklung, Anschlag
- 35: Wälzbahn
- 36: Lagerkäfig
- 37: Wälzkörper
- 37A: Wälzkörper-Mantelfläche
- 39: Außenseite
- 45: Wälzbahn
- 50: Tasche oder Öffnung
- 52: Anschlagkante
- 52 A: Gegenanschlag
- 53: Vorsprung
- 60: Verankerungszapfen
- 61: Dübel
- 65: Abschlusskante
- 71: Seitenwand
- 72: Seitenwand
- 73: Längsrand
- 74: Vorsprung
- 80: Langloch
- 81: Anschlag
- 82: Anschlag

- F: Kraft

## Patentansprüche

1. Schwenklager mit einer Lagerschale (32), an der eine teilzylindrisch gekrümmte Wälzbahn (35) ausgebildet ist, und mit an der Wälzbahn (35) abrollenden, in einem Lagerkäfig (36) zusammengefassten Wälzkörpern (37), wobei der Lagerkäfig (36) und die Lagerschale (32) in radialer Richtung gegeneinander verriegelt sind und die Lagerschale (32) an dem einen ihrer in Umfangsrichtung gerichteten Enden mit mindestens einem Vorsprung (34) versehen ist, der sich in die Bewegungsebene des Lagerkäfigs (36) hinein erstreckt, **dadurch gekennzeichnet, dass** sich der Vorsprung (34) in eine Öffnung (80) des Lagerkäfigs (36) hinein erstreckt, die zu der Wälzbahn (35) hin offen und in beide Umfangsrichtungen geschlossen ist.

2. Schwenklager nach Anspruch 1, **dadurch gekennzeichnet, dass** die Öffnung (80) ein Langloch oder eine langlochförmige, zu der Wälzbahn (35) hin offene Ausnehmung ist.

3. Schwenklager nach Anspruch 1 oder 2, **dadurch gekennzeichnet, dass** der Vorsprung (34) eine an der Lagerschale (32) angeformte Lasche ist.

4. Schwenklager nach einem der Ansprüche 1 bis 3, **dadurch gekennzeichnet, dass** die beiden Enden der Öffnung (80) jeweils einen Anschlag (81, 82) bilden, wobei der eine Anschlag (81) die gegenseitige Beweglichkeit von Lagerkäfig (36) und Lagerschale (32) in die eine Umfangsrichtung, und der andere Anschlag (82) die gegenseitige Beweglichkeit von Lagerkäfig (36) und Lagerschale (32) in die entgegengesetzte Umfangsrichtung begrenzt.

5. Schwenklager nach einem der vorangehenden Ansprüche, **dadurch gekennzeichnet, dass** die Lagerschale (32) mit zwei Vorsprüngen (34) und der Lagerkäfig (36) entsprechend mit zwei Öffnungen (80) versehen ist.

6. Schwenklager nach Anspruch 5, **dadurch gekennzeichnet, dass** der Lagerkäfig (36) zwischen den zwei Öffnungen (80) mit einem an dem Lagerkäfig (36) einstückig angeformten Vorsprung (53) versehen ist, der der Wälzbahn (35) abgewandt radial weiter reicht, als die zylindrischen Mantelflächen (37A) der Wälzkörper (37).

7. Schwenklager nach einem der vorangehenden Ansprüche, **dadurch gekennzeichnet, dass** die Lagerschale (32) eine konvex gekrümmte Außenseite (39) und eine konkav gekrümmte Innenseite aufweist, und dass die Wälzbahn (35) an der Innenseite ausgebildet ist.

8. Schwenklager nach Anspruch 1, **dadurch gekennzeichnet, dass** die Lagerschale (32) an dem anderen ihrer in Umfangsrichtung gerichteten Enden mit einer zur Umfangsrichtung quer angeordneten, geraden Abschlusskante (65) versehen ist, bis an die heran die Wälzbahn (35) reicht.

9. Schwenklager nach einem der vorangehenden Ansprüche, **dadurch gekennzeichnet, dass** sich der Lagerkäfig (36) in Umfangsrichtung aus einem Hauptabschnitt, auf dem die Wälzkörper (37) angeordnet sind, und mindestens einem den Abschluss des Lagerkäfigs (36) bildenden Endabschnitt ohne Wälzkörper zusammensetzt, und dass sich die Öffnung (80) auf dem Endabschnitt befindet.

10. Schwenklager nach einem der vorangehenden Ansprüche, **dadurch gekennzeichnet, dass** sich der Lagerkäfig (36) aus einem die Wälzkörper (37) aufnehmenden Mittelbereich und Langsrändern (73) zu beiden Seiten des Mittelbereichs zusammensetzt, und dass sich die radiale Verriegelung an den Längsrändern (73) befindet.

11. Schwenklager nach Anspruch 10, **dadurch gekennzeichnet, dass** der Lagerkäfig (36) an den Längsrändern (73) flacher als in dem Mittelbereich gestaltet ist.

12. Schwenklager nach Anspruch 10 oder 11, **dadurch gekennzeichnet, dass** die Längsränder (73) innen an Seitenwänden (71, 72) der Lagerschale (32) geführt sind.

13. Schwenklager nach Anspruch 12, **dadurch gekennzeichnet, dass** die Seitenwände (71, 72) der Lagerschale (32) radial weniger weit reichen, als die zylindrischen Mantelflächen (37A) der Wälzkörper (37).

## Claims

1. Pivot bearing having a bearing shell (32), on which a rolling track (35) which is curved in a partially cylindrical manner is configured, and having rolling bodies (37) which roll on the rolling track (35) and are combined in a bearing cage (36), the bearing cage (36) and the bearing shell (32) being locked against one another in the radial direction, and, at the one of its ends which are directed in the circumferential direction, the bearing shell (32) being provided with at least one projection (34) which extends into the plane of movement of the bearing cage (36), **characterized in that** the projection (34) extends into an opening (80) of the bearing cage (36), which opening (80) is open towards the rolling track (35) and is closed in both circumferential directions.

2. Pivot bearing according to Claim 1, **characterized in that** the opening (80) is a slot or a slot-shaped recess which is open towards the rolling track (35).

3. Pivot bearing according to Claim 1 or 2, **characterized in that** the projection (34) is a lug which is integrally formed on the bearing shell (32).

4. Pivot bearing according to one of Claims 1 to 3, **characterized in that** the two ends of the opening (80) in each case form a stop (81, 82), the one stop (81) limiting the mutual movability of the bearing cage (36) and the bearing shell (32) in the one circumferential direction, and the other stop (82) limiting the mutual movability of the bearing cage (36) and the bearing shell (32) in the opposite circumferential direction.

5. Pivot bearing according to one of the preceding claims, **characterized in that** the bearing shell (32) is provided with two projections (34), and the bearing cage (36) is provided correspondingly with two openings (80).

6. Pivot bearing according to Claim 5, **characterized in that** the bearing cage (36) is provided between the two openings (80) with a projection (53) which is integrally formed in one piece on the bearing cage (36) and reaches further radially in a manner which faces away from the rolling track (35) than the cylindrical circumferential faces (37A) of the rolling bodies (37).

7. Pivot bearing according to one of the preceding claims, **characterized in that** the bearing shell (32) has a convexly curved outer side (39) and a concavely curved inner side, and **in that** the rolling track (35) is configured on the inner side.

8. Pivot bearing according to Claim 1, **characterized in that**, at the other one of its ends which are directed in the circumferential direction, the bearing shell (32) is provided with a straight termination edge (65) which is arranged transversely with respect to the circumferential direction and up to which the rolling track (35) reaches.

9. Pivot bearing according to one of the preceding claims, **characterized in that** the bearing cage (36) is composed in the circumferential direction of a main section, on which the rolling bodies (37) are arranged, and at least one end section without rolling bodies which forms the termination of the bearing cage (36), and **in that** the opening (80) is situated on the end section.

10. Pivot bearing according to one of the preceding claims, **characterized in that** the bearing cage (36) is composed of a centre region which receives the rolling bodies (37) and of longitudinal edges (73) on both sides of the centre region, and **in that** the radial locking means is situated at the longitudinal edges (73).

11. Pivot bearing according to Claim 10, **characterized in that** the bearing cage (36) is of flatter design at the longitudinal edges (73) than in the centre region.

12. Pivot bearing according to Claim 10 or 11, **characterized in that** the longitudinal edges (73) are guided on the inside on side walls (71, 72) of the bearing shell (32).

13. Pivot bearing according to Claim 12, **characterized in that** the side walls (71, 72) of the bearing shell (32) reach less far radially than the cylindrical circumferential faces (37A) of the rolling bodies (37).

## Revendications

1. Palier pivotant comprenant un coussinet de palier (32) sur lequel est formée une bande de roulement (35) curviligne partiellement cylindrique, et comprenant des corps roulants (37) qui roulent sur la bande de roulement (35) et regroupés dans une cage de roulement (36), la cage de roulement (36) et le coussinet de palier (32) étant verrouillés l'un contre l'autre dans le sens radial et le coussinet de palier (32) étant pourvu, à l'une de ses extrémités orientées dans le sens circonférentiel, d'au moins une partie saillante (34) qui s'étend à l'intérieur du plan de mouvement de la cage de roulement (36), **caractérisé en ce que** la partie saillante (34) s'étend à l'intérieur d'une ouverture (80) de la cage de roulement (36), laquelle est ouverte en direction de la bande de roulement (35) et fermée dans les deux directions circonférentielles.

2. Palier pivotant selon la revendication 1, **caractérisé en ce que** l'ouverture (80) est un trou oblong ou un évidement en forme de trou oblong ouvert en direction de la bande de roulement (35).

3. Palier pivotant selon la revendication 1 ou 2, **caractérisé en ce que** la partie saillante (34) est une languette formée sur le coussinet de palier (32).

4. Palier pivotant selon l'une des revendications 1 à 3, **caractérisé en ce que** les deux extrémités de l'ouverture (80) forment respectivement une butée (81, 82), une butée (81) délimitant la mobilité réciproque de la cage de roulement (36) et du coussinet de palier (32) dans une direction circonférentielle et l'autre butée (82) la mobilité réciproque de la cage de roulement (36) et du coussinet de palier (32) dans la direction circonférentielle opposée.

5. Palier pivotant selon l'une des revendications précédentes, **caractérisé en ce que** le coussinet de palier (32) est pourvu de deux parties saillantes (34) et la cage de roulement (36) est pourvue en conséquence de deux ouvertures (80).

6. Palier pivotant selon la revendication 5, **caractérisé en ce que** la cage de roulement (36) est pourvue entre les deux ouvertures (80) d'une partie saillante (53) façonnée d'un seul tenant sur la cage de roulement (36), laquelle s'étend dans le sens radial à l'opposé de la bande de roulement (35) plus loin que les surfaces cylindriques (37A) des corps roulants (37).

7. Palier pivotant selon l'une des revendications précédentes, **caractérisé en ce que** le coussinet de palier (32) possède un côté extérieur (39) curviligne convexe et un côté intérieur curviligne concave, et **en ce que** la bande de roulement (35) est formée sur le côté intérieur.

8. Palier pivotant selon la revendication 1, **caractérisé en ce que** le coussinet de palier (32) est pourvu sur l'autre de ses extrémités orientées dans le sens circonférentiel d'une arête de terminaison (65) droite disposée transversalement par rapport à la direction circonférentielle, la bande de roulement (35) s'étendant jusque contre celle-ci.

9. Palier pivotant selon l'une des revendications précédentes, **caractérisé en ce que** la cage de roulement (36) se compose dans la direction circonférentielle d'une portion principale, sur laquelle sont disposés les corps roulants (37), et d'au moins une portion d'extrémité sans corps roulants qui forme la terminaison de la cage de roulement (36), et **en ce que** l'ouverture (80) se trouve sur la portion d'extrémité.

10. Palier pivotant selon l'une des revendications précédentes, **caractérisé en ce que** la cage de roulement (36) se compose d'une zone centrale qui accueille les corps roulants (37) et de bords longitudinaux (73) des deux côtés de la zone centrale, et **en ce que** le verrouillage radial se trouve au niveau des bords longitudinaux (73).

11. Palier pivotant selon la revendication 10, **caractérisé en ce que** la cage de roulement (36) est de configuration plus plate au niveau des bords longitudinaux (73) que dans la zone centrale.

12. Palier pivotant selon la revendication 10 ou 11, **caractérisé en ce que** les bords longitudinaux (73) passent à l'intérieur au niveau des parois latérales (71, 72) du coussinet de palier (32).

13. Palier pivotant selon la revendication 12, **caractérisé en ce que** les parois latérales (71, 72) du coussinet de palier (32) s'étendent moins loin dans le sens radial que les surfaces cylindriques (37A) des corps roulants (37).
